# EUROPEAN PATENT APPLICATION

(11) **EP 3 309 013 A1**
(43) Date of publication of application: **18.04.2018**
(21) Application number: 17190155.6
(22) Date of filing: 08.09.2017
(51) Int. Cl.: B60R 7/02

(54) **A TRUNK LID STOWAGE SYSTEM**

(30) Priority: 13.10.2016 GB 201617378
(71) Applicant: Ford Global Technologies, LLC, Dearborn, MI 48126 (US)
(72) Inventor: LOUGHLIN, Kyle, London, TW1 1LD (GB); COOK, Susan, London, SE4 2LR (GB)
(74) Representative: Haseltine Lake LLP

(57) **Abstract**

A motor vehicle trunk lid stowage system, the stowage system comprising:
a shelf member; and
first and second flexible side walls attached to respective ends of the shelf member, the first and second side walls configured to be attached to an underside of a motor vehicle trunk lid;
wherein the shelf member is movable between a stowed position, in which the side walls are collapsed and the shelf member is against the underside of the trunk lid, and a deployed position in which the shelf member is suspended by the side walls and the shelf member is spaced apart from the underside of the trunk lid.

## Description

### Technical Field

This disclosure relates generally to a trunk lid stowage system and particularly, although not exclusively, relates to a trunk lid stowage system comprising a shelf member that is attachable to an underside of a trunk lid by virtue of a pair of flexible side walls, the side walls being collapsible such that the shelf member can be stowed against the underside of the trunk lid.

### Background

It is common to transport items of clothing in a motor vehicle and it is often desirable to minimise the creasing of such clothing items. Currently, such items of clothing may be hung from a hook on a ceiling of the motor vehicle, which may be provided on or alongside a grab handle assembly. However, hanging items of clothing in this way may obscure the view of the occupants of the vehicle. This may be particularly disadvantageous in the case of the driver, for example when looking over their shoulder to check a blind spot of the vehicle. Clothes hanging from such a hook may also be in the way of passengers of the vehicle and may make occupying a seat closest to the hook undesirable. Clothes hanging from such hooks may also appears unsightly from the outside of the vehicle and may detract from the overall appearance of the vehicle.

Alternatively, such items of clothing may be placed flat on seats of the vehicle. However, the clothes may slide off the seats during motion of the vehicle, particularly in the case of leather seats. Also, placing items of clothing on seats may not be possible in the event that the vehicle is fully occupied.

### Statements of Invention

According to an aspect of the present disclosure, there is provided a motor vehicle trunk lid stowage system, the stowage system comprising:
a shelf member; and
first and second flexible side walls attached to respective ends of the shelf member, the first and second side walls being attachable to an underside of a motor vehicle trunk (e.g. boot) lid;
wherein the shelf member is movable between a stowed position, in which the side walls are collapsed and the shelf member is against the underside of the trunk lid, and a deployed position in which the shelf member is suspended by the side walls and the shelf member is spaced apart from the underside of the trunk lid.

The stowage system may provide a neat storage solution for flat items, which are conveniently kept out of the way. The shelf may lower to a height that is convenient for the user to access when the trunk is in an open position.

The stowage system may further comprise one or more further shelf members. The further shelf members may be attached to and may extend between the first and second side walls. The further shelf members may be spaced apart from the shelf member when in the deployed position. The further shelf members may be provided between the shelf member and the underside of the trunk lid or beneath the shelf member. In either case, the shelf members may be spaced apart from one another when the stowage system is in the deployed position.

A bottom of the shelf member may be configured to be flush with the underside of the trunk lid surrounding the shelf member when in the stowed position. The shelf member may reside in a recess in the underside of the trunk lid when in the stowed position.

The stowage system may further comprise a fastener or release mechanism to selectively secure the shelf member to the underside of the trunk lid to hold the stowage system in the stowed position. The fastener or release mechanism may comprise a hook and loop fastening system, clasp, catch, toggle, strap, magnet or any other type of releasable connector.

The shelf member may rotate as the shelf member moves between the deployed and stowed positions. The shelf member may also translate as the shelf member moves between the deployed and stowed positions.

The side walls may be configured such that the shelf member is substantially horizontal when the trunk lid is in an open position. The first and second side walls may be taller at one edge of the shelf member than an opposite edge of the shelf member such that the one edge may be further from the underside of the trunk lid than the opposite edge when in the deployed position.

A top surface of the shelf member may comprise a non-slip surface.

The trunk lid may rotate when moving between open and closed positions of the trunk lid. The trunk lid may be rotatable about a horizontal axis extending laterally across the motor vehicle. The trunk lid may be substantially horizontal when in a closed position.

The trunk lid may at least partially form an exterior door providing access to a cargo area of the motor vehicle. Alternatively, the trunk lid may form an interior parcel shelf.

The stowage system may be retrofitted to the trunk lid.

A trunk lid may comprise the above-mentioned motor vehicle trunk lid stowage system.

A vehicle, such as a motor vehicle, may comprise the above-mentioned motor vehicle trunk lid stowage system or trunk lid.

According to a further aspect of the present disclosure there is provided a method of retrofitting the above-mentioned motor vehicle trunk lid stowage system to a trunk lid.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a perspective view of a stowage system according to an example of the present disclosure and shows the stowage system in a deployed position with the trunk lid in an open position;
Figure 2 is a perspective view of the stowage system according to the example of the present disclosure and shows the stowage system in a stowed position with the trunk lid in the open position;
Figure 3 is a perspective view of the stowage system according to the example of the present disclosure and shows the stowage system in the stowed position with the trunk lid in a closed position; and
Figure 4 is an underside view of the trunk lid showing the stowage system according to the example of the present disclosure in the stowed position.

### Detailed Description

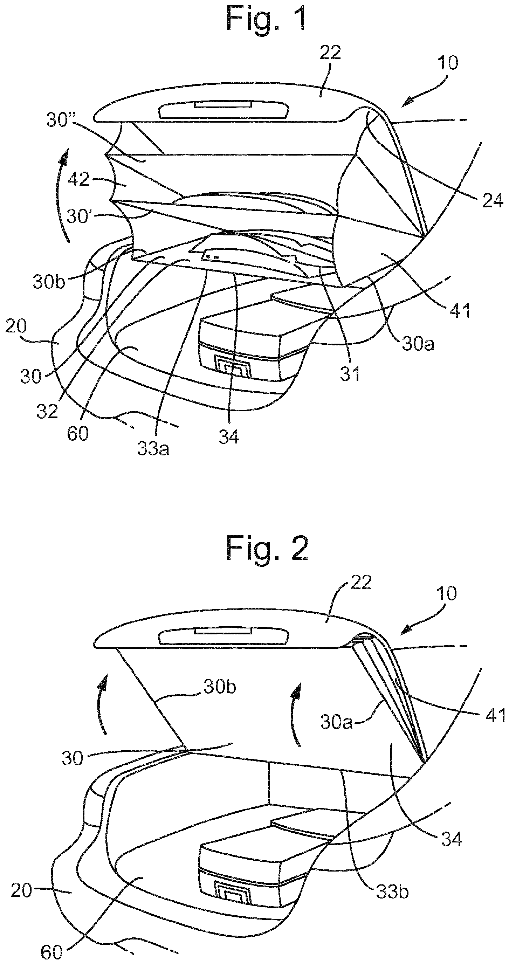

With reference to Figures 1 to 4, a stowage system 10 for a motor vehicle 20 will be described. The stowage system 10 is provided under a trunk lid 22 of the motor vehicle 20. In particular, the stowage system 10 is connected to an underside 24 of the trunk lid 22.

The stowage system 10 comprises a shelf member 30, which may be substantially planar, e.g. flat. Articles, such as items of clothing 31, may be placed on a top surface 32 of the shelf member 30. The shelf member 30 may be sized accordingly, e.g. such that a jacket may be accommodated on the top surface 32. The top surface 32 of the shelf member 30 may comprise a non-slip material, which may limit sliding movement of the articles placed on the shelf member 30. The shelf member 30 may be substantially planar, e.g. with a thickness that is an order of magnitude less than its width or length. The shelf member 30 may comprise a hard board type material, such as a plastics material, cardboard material, a wood product material or any other rigid or semi-rigid material. The shelf member 30 may be substantially flat when deployed and stowed, however, the shelf member 30 may be able to conform to the shape of the underside 24 of the trunk lid 22 when stowed. In any event, the shelf member 30 may have sufficient rigidity that it presents a flat surface to a user when in the deployed position.

The stowage system 10 further comprises first and second sidewalls 41, 42. The first sidewall 41 is attached to a first end 30a of the shelf member 30 and the second sidewall 42 is attached to a second end 30b of the shelf member, which is opposite the first end. The first and second sidewalls 41, 42 are spaced apart in a lateral direction of the motor vehicle 20. The first and second sidewalls 41, 42 are connectable to the underside 24 of the trunk lid 22. The first and second sidewalls 41, 42 are flexible such that the sidewalls may be folded and collapsed when the stowage system 10 is in the stowed position depicted in Figure 2. The first and second sidewalls 41, 42 may otherwise support the shelf member 30 when the stowage system is in the deployed position depicted in Figure 1 with the shelf member 30 being suspended from the first and second sidewalls 41, 42. In the deployed position the shelf member 30 is spaced apart from the underside 24 of the trunk lid 22 such that an opening is presented to the user and the shelf member 30 is accessible for articles to be placed thereon.

As is depicted in Figure 1, the stowage system 10 may further comprise one or more further shelf members. In the particular example shown there are two further shelf members 30', 30". The further shelf members 30', 30" may be attached to and may extend between the first and second sidewalls 41, 42 in the same way as the shelf member 30. However, the further shelf members 30', 30" may be spaced apart from the shelf member 30 when in the deployed position. Accordingly, the further shelf members 30', 30" may connect to the first and second sidewalls 41, 42 at positions that are spaced apart from where the shelf member 30 connects to the sidewalls 41, 42. Each of the first and second sidewalls 41, 42 may be continuous across the plurality of shelf members or individual sidewall portions may be provided between neighbouring shelf members.

The first and second side walls 41, 42 may be taller at one edge 33a of the shelf member than an opposite edge 33b of the shelf member. The edge 33a may be that which is closest to the user when facing the trunk. This way, when the trunk lid 22 is opened and at a first angle relative to the horizontal, the shelf member 30 when in the deployed position may be at a second angle relative to the horizontal, different from the first angle. The sidewalls 41, 42 may be configured such that the second angle is approximately 0° such that the shelf member 30 is substantially horizontal when the trunk lid 22 is in an open position. In the event that further shelf members 30', 30" are provided, the further shelf members may be attached to the first and second sidewalls 41, 42 such that they are at an angle to the horizontal that is between the first and second angles. Accordingly, the ends of the shelf members 30, 30', 30" may be angled with respect to one another when the stowage system is in the deployed position. As a result, the stowage system 10 may resemble an expanding file. It will therefore be appreciated that the shelf members 30, 30', 30" may rotate as the shelf members move between the deployed and stowed positions. However there may be also a degree of translation as the shelf members move between the deployed and stowed positions. The shelf members 30, 30', 30" may only be connected to the trunk lid 22 via the first and second sidewalls 41, 42. However, the opposite edge of the shelf members may be pivotably connected to the trunk lid 22.

A bottom 34 of the shelf member 30 may be configured to be flush with the underside 24 of the trunk lid 22 when the stowage system 10 is in the stowed position. For example, the shelf member 30 may reside in a recess 26 in the underside 24 of the trunk lid 22 when in the stowed position. The recess 26 may be sized to accommodate the shelf member 30. Trim 28 on the underside of the trunk lid 22 may be shaped to accommodate the stowage system 10.

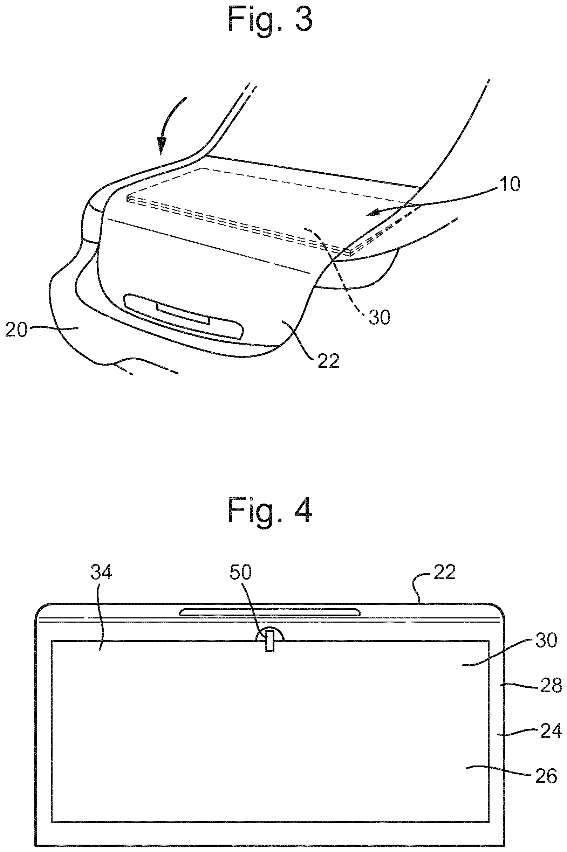

As is depicted in Figure 4, the stowage system 10 may further comprise a fastener or release mechanism 50, which is configured to selectively secure the shelf member 30 to the underside 24 of the trunk lid 22. As depicted, the release mechanism 50 may comprise a rotatable catch, which in a first position extends out beneath the shelf member 30, and in a second position is retracted so that the shelf member 30 may be lowered relative to the trunk lid 22. The release mechanism 50 may comprise any other type of mechanism or fastener such as a hook and loop fastening system, a clasp, a catch, a toggle, a strap, a magnet or any other type of releasable connector.

The trunk lid 22 may rotate when moving between open and closed positions. The trunk lid 22 may not necessarily rotate about a fixed rotational axis, e.g. by virtue of a four bar chain mechanism. The trunk lid 22 may rotate about a horizontal axis extending laterally across the motor vehicle 20, e.g. along edge 33b. The underside of the trunk lid 22 may be approximately horizontal when in the closed position. Accordingly, the shelf member(s) may also be substantially horizontal when in the stowed position. Alternatively, the underside of the trunk lid or shelf member(s) may not be substantially horizontal when closed/stowed, for example in the case of the trunk lid for a mini-van type vehicle, which may at least partially be substantially vertical when closed. In either case, the articles held by the stowage system 10 may be held in place by virtue of a compression fit between the shelf member 30 and the trunk lid 22.

As shown, the trunk lid 22 may be provided at the rear of the motor vehicle 20, however, it is equally envisaged that the trunk lid 22 may be provided at the front of the motor vehicle 20. The trunk lid 22 may at least partially form an exterior door, which provides access to a cargo area 60 of the motor vehicle 20. However, it is also envisaged that the trunk lid 22 may be an internal feature, such as a parcel shelf. Accordingly, the trunk lid 22 may be the trunk lid of a saloon type vehicle or a parcel shelf of a hatchback type vehicle.

The stowage system 10 may be applied to a new vehicle during manufacture. However, it is also envisaged that the stowage system 10 may be retro-fitted to an existing vehicle.

It will be appreciated that the stowage system 10 advantageously permits articles to be stored on one or more of the shelf members 30, 30', 30" and that the stowage system 10 may be conveniently folded up into the underside of the trunk lid 22. The stowage system 10 may therefore not appreciably diminish from the volume of the cargo area 60 and does not impact on the floor of the cargo area 60. Also, the stowed articles may be kept out of the main vehicle cabin and may thus be kept out of view.

## Claims

1. A motor vehicle trunk lid stowage system (10), the stowage system comprising:
a shelf member (30); and
first and second flexible side walls (41, 42) attached to respective ends (30a, 30b) of the shelf member, the first and second side walls configured to be attached to an underside (24) of a motor vehicle trunk lid (22);
wherein the shelf member (30) is movable between a stowed position, in which the side walls (41, 42) are collapsed and the shelf member (30) is against the underside (24) of the trunk lid, and a deployed position in which the shelf member (30) is suspended by the side walls (41, 42) and the shelf member (30) is spaced apart from the underside (24) of the trunk lid.

2. The motor vehicle trunk lid stowage system (10) of claim 1, wherein the stowage system further comprises one or more further shelf members (30', 30"), the further shelf members attached to and extending between the first and second side walls (41, 42) and being spaced apart from the shelf member (30) when in the deployed position.

3. The motor vehicle trunk lid stowage system (10) of claim 1 or 2, wherein a bottom (34) of the shelf member (30) is configured to be flush with the underside (24) of the trunk lid (22) surrounding the shelf member when in the stowed position.

4. The motor vehicle trunk lid stowage system (10) of any of the preceding claims, wherein the stowage system further comprises a fastener (50) to selectively fasten the shelf member (30) to the underside (24) of the trunk lid (22) to hold the stowage system in the stowed position.

5. The motor vehicle trunk lid stowage system (10) of any of the preceding claims, wherein the shelf member (30) rotates as the shelf member moves between the deployed and stowed positions.

6. The motor vehicle trunk lid stowage system (10) of any of the preceding claims, wherein the side walls (41, 42) are configured such that the shelf member (30) is substantially horizontal when the trunk lid (22) is in an open position.

7. The motor vehicle trunk lid stowage system (10) of any of the preceding claims, wherein the first and second side walls (41, 42) are taller at one edge (33a) of the shelf member than an opposite edge (33b) of the shelf member such that the one edge is further from the underside (24) of the trunk lid (22) than the opposite edge when in the deployed position.

8. The motor vehicle trunk lid stowage system (10) of any of the preceding claims, wherein a top surface (32) of the shelf member (30) comprises a non-slip surface.

9. The motor vehicle trunk lid stowage system (10) of any of the preceding claims, wherein the trunk lid (22) rotates when moving between open and closed positions of the trunk lid.

10. The motor vehicle trunk lid stowage system (10) of claim 9, wherein the trunk lid (22) is rotatable about a horizontal axis extending laterally across the motor vehicle (20).

11. The motor vehicle trunk lid stowage system (10) of any of the preceding claims, wherein the trunk lid (22) is substantially horizontal when in a closed position.

12. The motor vehicle trunk lid stowage system (10) of any of the preceding claims, wherein the trunk lid (22) at least partially forms an exterior door providing access to a cargo area (60) of the motor vehicle (20).

13. The motor vehicle trunk lid stowage system (10) of any of the preceding claims, wherein the trunk lid (22) forms an interior parcel shelf.

14. The motor vehicle trunk lid stowage system (10) of any of the preceding claims, wherein the stowage system is retrofitable to a trunk lid (22).

15. A trunk lid (22) comprising the motor vehicle trunk lid stowage system (10) of any of the preceding claims.
